# EUROPÄISCHE PATENTSCHRIFT

(11) **EP 4 665 085 B1**
(45) Veröffentlichungstag und Bekanntmachung des Hinweises auf die Patenterteilung: **18.11.2026**
(21) Anmeldenummer: 25176061.7
(22) Anmeldetag: 13.05.2025
(51) Int. Cl.: H05B 1/02, B29C 65/00, B65B 57/00, B65B 63/00, B65B 63/08, B65B 51/10

(54) **VERFAHREN UND VORRICHTUNG ZUM BESTIMMEN EINER FUNKTIONSFÄHIGKEIT EINER HEIZEINRICHTUNG FÜR EINE VERPACKUNGSMASCHINE**
METHOD AND DEVICE FOR DETERMINING THE FUNCTIONALITY OF A HEATING DEVICE FOR A PACKAGING MACHINE
PROCÉDÉ ET DISPOSITIF POUR DÉTERMINER UNE CAPACITÉ FONCTIONNELLE D'UN DISPOSITIF DE CHAUFFAGE POUR UNE MACHINE D'EMBALLAGE

(30) Priorität: 13.06.2024 DE 102024116568
(43) Veröffentlichungstag der Anmeldung: 17.12.2025
(73) Patentinhaber: MULTIVAC Sepp Haggenmüller SE & Co. KG, 87787 Wolfertschwenden (DE)
(72) Erfinder: PFISTER, Marcus, 87730 Bad Grönenbach (DE); HEINEKE, Markus, 87545 Burgberg (DE); MAYER, Felix, 88453 Erolzheim (DE); FELCH, Florian, 87477 Sulzberg (DE); SCHÖB, Markus, 87749 Hawangen (DE)
(74) Vertreter: Grünecker Patent- und Rechtsanwälte PartG mbB

(56) Entgegenhaltungen:
- EP-A1- 3 369 554
- EP-A1- 3 761 757
- EP-A1- 3 900 915
- DE-A1- 102011 017 448

## Beschreibung

Die vorliegende Erfindung bezieht sich auf ein Verfahren zum Bestimmen einer Funktionsfähigkeit einer Heizeinrichtung mit wenigstens einem Heizelement für eine Verpackungsmaschine, ein Detektionssystem zum Bestimmen einer Funktionsfähigkeit einer Heizeinrichtung für eine Verpackungsmaschine sowie eine Verpackungsmaschine mit einem Detektionssystem.

### Stand der Technik

Heizeinrichtungen für Verpackungsmaschinen sind aus dem Stand der Technik bekannt. Sie umfassen üblicherweise mehrere Heizelemente. Um die Funktionsfähigkeit der Heizeinrichtung zu bestimmen, wird in der Regel die Heizleistung oder der Heizstrom der einzelnen Heizelemente gemessen. Die Summe der gemessenen Heizleistungen oder Heizströme bildet einen Referenzwert, mit dem in der Folge gemessene Heizleistungen oder Heizströme verglichen werden. Basierend auf der Abweichung wird die Funktionsfähigkeit der Heizeinrichtung bestimmt.

EP 3 900 915 A1 betrifft eine beheizte Arbeitsstation für eine Verpackungsmaschine, welche bahnförmiges Material verarbeitet.

EP 3 369 554 A1 lehrt ein Verfahren zum Ausformen von Näpfen in einer erwärmten Folienbahn.

EP 3 761 757 A1 betrifft eine Heizvorrichtung und ein Verfahren zum Erfassen eines Fehlers in einer Heizvorrichtung.

DE 10 2011 017 448 A1 bezieht sich auf ein Verfahren zum Betreiben einer Behältnisbehandlungsanlage.

Der Nachteil dieser Anwendungen besteht darin, dass aufgrund eines defekten Heizelements ein falscher Referenzwert bestimmt und anschließend auch die Funktionsfähigkeit der Heizeinrichtung falsch bewertet werden kann. Es besteht also die Gefahr, dass ein defektes Heizelement nicht erkannt und die Heizeinrichtung mit dem defekten Heizelement betrieben wird.

### Aufgabe

Ausgehend von dem bekannten Stand der Technik besteht die zu lösende technische Aufgabe darin, ein Verfahren oder eine Vorrichtung anzugeben, das/die eine einfache und zuverlässige Bestimmung der Funktionsfähigkeit einer Heizeinrichtung für eine Verpackungsmaschine ermöglicht.

### Lösung

Diese Aufgabe wird erfindungsgemäß durch ein Verfahren zum Bestimmen einer Funktionsfähigkeit einer Heizeinrichtung mit wenigstens einem Heizelement für eine Verpackungsmaschine gemäß dem Anspruch 1, ein Detektionssystem zum Bestimmen einer Funktionsfähigkeit einer Heizeinrichtung für eine Verpackungsmaschine gemäß dem Anspruch 9 und/oder eine Verpackungsmaschine mit einem Detektionssystem gemäß dem Anspruch 11 gelöst.

Vorteilhafte Weiterbildungen der Erfindung sind in den Unteransprüchen erfasst.

Ein Aspekt der Erfindung betrifft ein Verfahren zum Bestimmen einer Funktionsfähigkeit einer Heizeinrichtung mit wenigstens einem Heizelement für eine Verpackungsmaschine, wobei das Verfahren die folgenden Schritte umfasst:
- Bestimmen einer aktuellen Heizleistung der Heizeinrichtung mittels einer Bestimmungseinheit,
- Bestimmen einer normierten aktuellen Heizleistung basierend auf der aktuellen Heizleistung mittels einer Normierungseinheit,
- Bestimmen einer Abweichung der normierten aktuellen Heizleistung von einer normierten theoretischen Heizleistung mittels einer Vergleichseinheit,
- Bestimmen eines Statussignals über die Funktionsfähigkeit basierend auf der Abweichung mittels einer Auswähleinheit, und
- Ausgeben des Statussignals mittels einer Ausgabeeinheit.

Die normierte aktuelle Heizleistung wird gemäß der folgenden ersten Formel bestimmt: ${P}_{TN \left(aktuell\right)} = \frac{{\left({U}_{TN}\right)}^{2}}{{\left({U}_{M}\right)}^{2}} \times {P}_{M} ;$ wobei *U_{TN}* eine Bezugs-Heizspannung, insbesondere von 230 Volt, *U_{M}* eine aktuelle Maschinenspannung und *P_{M}* die aktuelle Heizleistung bei der aktuellen Maschinenspannung *U_{M}* angibt.

Die normierte theoretische Heizleistung wird gemäß der folgenden zweiten Formel bestimmt: ${P}_{TN \left(theoretisch\right)} = \frac{{\left({U}_{TN}\right)}^{2}}{{\left({U}_{T}\right)}^{2}} \times {P}_{T} ;$ wobei *U_{TN}* eine Bezugs-Heizspannung, insbesondere von 230 Volt, *U_{T}* eine theoretische Maschinenspannung und *P_{T}* eine theoretische Heizleistung bei der theoretischen Maschinenspannung *U_{T}* angibt.

Das Verfahren bietet die Möglichkeit, einfach und zuverlässig die Heizleistung und Funktionsfähigkeit der Heizeinrichtung zu bestimmen. Es kann optional festgestellt werden, ob die Heizeinrichtung oder ein einzelnes Heizelement defekt ist. Dadurch kann ein sicherer Betrieb der Heizeinrichtung gewährleistet und im Idealfall eine Wartung der Heizeinrichtung erleichtert werden. Optional kann verhindert werden, dass die Heizeinrichtung trotz Defekt betrieben wird. Dies kann im Idealfall kann eine Langlebigkeit und/oder Ausfallsicherheit der Heizeinrichtung verbessern. Optional kann sichergestellt werden, dass die Heizeinrichtung eine geplante Arbeitsmaßnahme, insbesondere im Zusammenhang mit der Verpackungsmaschine, z.B. Erwärmen von zu bearbeiteten Rohstoffen (z.B. Folie, Verpackungsschale) oder Werkzeugen (z.B. Siegelrahmen), erfolgreich durchführen kann. Dies kann eine Qualität der unter Verwendung der Heizeinrichtung hergestellten Erzeugnisse (z.B. fertige Verpackung) verbessern und im Idealfall einen Ausschuss reduzieren.

Vorzugsweise wird die aktuelle Heizleistung mit zumindest einem Sensor gemessen oder es werden ein aktueller Maschinenstrom und eine aktuelle Maschinenspannung der Heizeinrichtung mit zumindest einem Sensor gemessen und die aktuelle Heizleistung wird basierend auf dem aktuellen Maschinenstrom und der aktuellen Maschinenspannung mittels der Bestimmungseinheit bestimmt. Dadurch kann die aktuelle Heizleistung der Heizeinrichtung einfach und genau bestimmt werden. Die aktuelle Heizleistung kann durch Bestimmen eines Maximalwerts und/oder Bilden eines Mittelwerts von gemessenen Heizleistungswerten oder Maschinenstromwerten und Maschinenspannungswerten bestimmt werden. Die Heizleistungswerte oder Maschinenstromwerte und Maschinenspannungswerte können über eine festgelegte oder variable Zeitspanne hinweg erfasst und ausgewertet, insbesondere ein Maximalwert bestimmt oder die Heizleistungswerte oder Maschinenstromwerte und Maschinenspannungswerte gemittelt werden. Die Zeitspanne kann z.B. mindestens ungefähr 30 Sekunden, vorzugsweise mindestens ungefähr eine Minute betragen. Die Zeitspanne kann höchstens ungefähr 5 Minuten, vorzugsweise höchstens ungefähr 3 Minuten betragen. Optional können eine festgelegte oder variable Anzahl an Heizleistungswerten oder Maschinenstromwerten und Maschinenspannungswerten erfasst und diese ausgewertet werden. Es können mindestens ein Heizleistungswert oder Maschinenstromwert und Maschinenspannungswert, vorzugsweise mindestens 3 Heizleistungswerte oder Maschinenstromwerte und Maschinenspannungswerte, und/oder höchstens 15 Heizleistungswerte oder Maschinenstromwerte und Maschinenspannungswerte, vorzugsweise höchstens 5 Heizleistungswerte oder Maschinenstromwerte und Maschinenspannungswerte, bestimmt werden. Dies kann eine Genauigkeit der Bestimmung der aktuelle Heizleistung verbessern.

Vorzugsweise ist die Abweichung eine, insbesondere betragsmäßige, Differenz zwischen der normierten aktuellen Heizleistung und der normierten theoretischen Heizleistung. Dies kann eine Vergleichbarkeit der aktuellen Heizleistung und der theoretischen Heizleistung ermöglichen. Dies kann die Genauigkeit des Verfahrens erhöhen. Die normierte aktuelle Heizleistung und die normierte theoretische Heizleistung können bezüglich derselben Bezugsgröße, insbesondere einer Bezugs-Heizspannung, normiert werden. Dadurch kann die Abweichung besonders einfach bestimmt werden.

Vorzugsweise wird die Abweichung mit einem Schwellenwert verglichen, wobei ein erstes Statussignal zum Angeben einer fehlerfreien Funktion bestimmt wird, wenn die Abweichung kleiner als der Schwellenwert ist, wobei ein zweites Statussignal zum Angeben einer fehlerhaften Funktion bestimmt wird, wenn die Abweichung mindestens dem Schwellenwert entspricht. Dadurch kann die Genauigkeit des Verfahrens weiter erhöht werden. Dadurch kann bestimmt werden, ob die Heizeinrichtung fehlerfrei oder fehlerhaft ist. Der Schwellenwert kann angeben, wie stark sich die normierte aktuelle Heizleistung und die normierte theoretische Heizleistung höchstens unterscheiden dürfen, damit die Heizeinrichtung als fehlerfrei bewertet wird und damit für den Arbeitsbetrieb geeignet ist. Der Schwellenwert kann beliebig gewählt sein. Beispielsweise kann der Schwellenwert angeben, dass die normierte aktuelle Heizleistung und die normierte theoretische Heizleistung höchstens um 10 Prozent, vorzugsweise um höchstens 5 Prozent, vorzugsweise um höchstens 3 Prozent, voneinander abweichen dürfen. Optional kann der Schwellenwert angeben, dass die normierte aktuelle Heizleistung und die normierte theoretische Heizleistung höchstens um 300 Watt, vorzugsweise höchstens um 150 Watt, vorzugsweise höchstens um 50 Watt, voneinander abweichen dürfen. Das erste Statussignal und das zweite Statussignal können, insbesondere einem Bediener oder Wartungspersonal der Heizeinrichtung und/oder der Verpackungsmaschine, besonders einfach die Funktionsfähigkeit der Heizeinrichtung anzeigen. Dies kann eine Akzeptanz des Verfahrens beim Bediener oder Wartungspersonal erhöhen. Der Bediener oder das Wartungspersonal kann besonders einfach und schnell auf das Statussignal reagieren. Wird zum Beispiel das zweite Statussignal zum Angeben einer fehlerhaften Funktion bestimmt und ausgegeben, kann der Bediener oder Wartungspersonal frühzeitig darauf reagieren und entsprechende Maßnahmen, z. B. Anpassung oder sogar Stopp der Heizeinrichtung und/oder der Verpackungsmaschine, vornehmen. Dies kann sich positiv auf die Prozesse und Produktivität der Verpackungsmaschine auswirken.
Die Bezugs-Heizspannung kann grundsätzlich jeder beliebige Spannungswert, insbesondere mindestens 100 Volt, vorzugsweise mindestens 150 Volt, und/oder höchstens 350 Volt, vorzugsweise höchstens 300 Volt, sein. Die theoretische Maschinenspannung und die theoretische Heizleistung können eine Spannung bzw. eine Leistung angeben, bei der die Heizeinrichtung ideal arbeiten kann. Es kann gewünscht sein, dass die geplante Arbeitsmaßnahme durchgeführt wird, wenn die Heizeinrichtung ungefähr ideal arbeitet. Die Heizeinrichtung kann ideal arbeiten, wenn das durch sie erzeugte Arbeitsergebnis, z.B. Erwärmen von zu bearbeiteten Rohstoffen (z.B. Folie, Verpackungsschale) oder Werkzeugen (z.B. Siegelrahmen) optimal erreicht wird. Die theoretische Maschinenspannung und die theoretische Heizleistung können von der Verpackungsmaschine abhängig sein. Optional können die theoretische Maschinenspannung und die theoretische Heizleistung von einem Hersteller der Heizeinrichtung, beispielsweise einem entsprechenden Datenblatt, stammen. Die normierte theoretische Heizleistung kann mittels der Normierungseinheit bestimmt werden.

Vorzugsweise ist die normierte theoretischen Heizleistung in einem Datenspeicher der Heizeinrichtung und/oder der Verpackungsmaschine gespeichert. Dadurch kann die Vergleichseinheit zum Bestimmen der Abweichung der normierten aktuellen Heizleistung von der normierten theoretischen Heizleistung besonders einfach auf die normierte theoretischen Heizleistung zugreifen. Dies kann das Verfahren erleichtern und beschleunigen.

Vorzugsweise basiert die normierte theoretische Heizleistung auf theoretischen Betriebsdaten der Heizeinrichtung. Die theoretischen Betriebsdaten können einen Betriebszustand der Heizeinrichtung angeben, bei der sie ideal arbeiten kann. Die theoretischen Betriebsdaten können die theoretische Maschinenspannung und/oder die theoretische Heizleistung und/oder einen theoretischen Maschinenstrom und/oder eine Soll-Heiztemperatur der Heizeinrichtung sein. Optional können die theoretischen Betriebsdaten eine, insbesondere nahezu, gleichmäßige Belastung der Heizeinrichtung angeben. Die theoretischen Betriebsdaten können in einem Datenspeicher der Heizeinrichtung gespeichert sein.

Vorzugsweise basiert die normierte aktuelle Heizleistung, und insbesondere die aktuelle Heizleistung, auf aktuellen Betriebsbedingungen der Heizeinrichtung. Je nach den aktuellen Betriebsbedingungen, insbesondere Belastungsschwankungen der Heizeinrichtung, kann dies ideal arbeiten oder nicht. Mittels dieser Ausführungsform kann die Genauigkeit der Bestimmung der Funktionsfähigkeit der Heizeinrichtung verbessert werden. Die aktuellen Betriebsbedingungen können einen Betriebszustand der Heizeinrichtung angeben, bei der sie aktuell arbeitet. Die aktuellen Betriebsbedingungen können die aktuelle Maschinenspannung und/oder die aktuelle Heizleistung und/oder ein aktueller Maschinenstrom und/oder eine aktuelle Heiztemperatur der Heizeinrichtung sein. Optional können die aktuellen Betriebsbedingungen angeben, ob die Belastung der Heizeinrichtung schwankt oder, insbesondere nahezu, gleichmäßige ist. Die aktuellen Betriebsbedingungen können mittels geeigneter Sensoren erfasst werden. Die aktuellen Betriebsbedingungen können von den Sensoren an die Bestimmungseinheit weitergeleitet werden. Die Bestimmungseinheit kann basierend auf den aktuellen Betriebsbedingungen die normierte aktuelle Heizleistung bestimmen.

Vorzugsweise umfasst die Heizeinrichtung mehrere Heizelemente mit je einer aktuellen Teilheizleistung, wobei eine Summe der aktuellen Teilheizleistungen die aktuelle Heizleistung angibt. Dadurch kann sichergestellt werden, dass die aktuelle Heizleistung der Heizeinrichtung korrekt erfasst, insbesondere alle Heizelemente der Heizeinrichtung berücksichtigt, werden. Die Summe der aktuellen Teilheizleistungen kann mittels der Bestimmungseinheit gebildet werden.

Vorzugsweise misst zumindest ein Sensor die aktuellen Teilheizleistungen oder zumindest ein Sensor misst aktuelle Teilmaschinenströme und aktuelle Teilmaschinenspannungen der Heizelemente und bestimmt basierend auf den aktuellen Teilmaschinenströmen und den aktuellen Teilmaschinenspannungen die aktuelle Heizleistung. Dadurch können die aktuellen Teilheizleistungen der Heizelemente und damit die aktuelle Heizleistung der Heizeinrichtung einfach bestimmt werden. Die aktuellen Teilheizleistungen und/oder die aktuellen Teilmaschinenströme und/oder die aktuellen Teilmaschinenspannungen können zeitgleich oder nacheinander bestimmt, und insbesondere ausgewertet, werden.

Vorzugsweise wird das Statussignal an eine Steuerung der Verpackungsmaschine übertragen, insbesondere wobei ein Betrieb der Verpackungsmaschine basierend auf der Ausgabe gesteuert wird. Dadurch kann ein sicherer Betrieb der Heizeinrichtung und der Verpackungsmaschine gewährleistet werden. Wird zum Beispiel das zweite Statussignal zum Angeben einer fehlerhaften Funktion an die Steuerung der Verpackungsmaschine übertragen, kann ein Bediener der Verpackungsmaschine oder die Steuerung, insbesondere automatisch, darauf reagieren und entsprechende Maßnahmen, z.B. Anpassung oder sogar Stopp der Verpackungsmaschine, vornehmen. Es kann verhindert werden, dass die Verpackungsmaschine mit einer defekten Heizeinrichtung betrieben wird. Optional kann sichergestellt werden, dass die Verpackungsmaschine ihren geplanten Arbeitsprozess, z.B. Herstellen einer Verpackung, erfolgreich durchführen kann. Es kann eine Qualität der hergestellten Verpackungen verbessert und im Idealfall einen Ausschuss reduzieret werden. Dies kann sich positiv auf die Prozesse und Produktivität der Verpackungsmaschine auswirken.

Ein weiterer Aspekt der Erfindung betrifft ein Detektionssystem zum Bestimmen einer Funktionsfähigkeit einer Heizeinrichtung für eine Verpackungsmaschine, wobei das Detektionssystem umfasst:
- eine Bestimmungseinheit zum Bestimmen einer aktuellen Heizleistung der Heizeinrichtung,
- eine Normierungseinheit zum Bestimmen einer normierten aktuellen Heizleistung basierend auf der aktuellen Heizleistung,
- eine Vergleichseinheit zum Bestimmen einer Abweichung der normierten aktuellen Heizleistung von einer normierten theoretischen Heizleistung,
- eine Auswähleinheit zum Wählen eines Statussignals basierend auf der Abweichung, und
- eine Ausgabeeinheit zum Ausgeben des Statussignals.

Die normierte aktuelle Heizleistung wird gemäß der folgenden ersten Formel bestimmt: ${P}_{TN \left(aktuell\right)} = \frac{{\left({U}_{TN}\right)}^{2}}{{\left({U}_{M}\right)}^{2}} \times {P}_{M} ;$ wobei *U_{TN}* eine Bezugs-Heizspannung, insbesondere von 230 Volt, *U_{M}* eine aktuelle Maschinenspannung und *P_{M}* die aktuelle Heizleistung bei der aktuellen Maschinenspannung *U_{M}* angibt.

Die normierte theoretische Heizleistung wird gemäß der folgenden zweiten Formel bestimmt: ${P}_{TN \left(theoretisch\right)} = \frac{{\left({U}_{TN}\right)}^{2}}{{\left({U}_{T}\right)}^{2}} \times {P}_{T} ;$ wobei *U_{TN}* eine Bezugs-Heizspannung, insbesondere von 230 Volt, *U_{T}* eine theoretische Maschinenspannung und *P_{T}* eine theoretische Heizleistung bei der theoretischen Maschinenspannung *U_{T}* angibt.

Das Detektionssystem ermöglicht eine einfache und zuverlässige Bestimmung der Heizleistung und Funktionsfähigkeit der Heizeinrichtung. Es kann optional festgestellt werden, ob die Heizeinrichtung oder ein einzelnes Heizelement defekt ist. Dadurch kann ein sicherer Betrieb der Heizeinrichtung gewährleistet und im Idealfall eine Wartung der Heizeinrichtung erleichtert werden. Optional kann verhindert werden, dass die Heizeinrichtung trotz Defekt betrieben wird. Dies kann im Idealfall kann eine Langlebigkeit und/oder Ausfallsicherheit der Heizeinrichtung verbessern. Optional kann sichergestellt werden, dass die Heizeinrichtung eine geplante Arbeitsmaßnahme, insbesondere im Zusammenhang mit der Verpackungsmaschine, z.B. Erwärmen von zu bearbeiteten Rohstoffen (z.B. Folie, Verpackungsschale) oder Werkzeugen (z.B. Siegelrahmen), erfolgreich durchführen kann. Dies kann eine Qualität der unter Verwendung der Heizeinrichtung hergestellten Erzeugnisse (z.B. fertige Verpackung) verbessern und im Idealfall einen Ausschuss reduzieren.

Das Detektionssystem kann ein Rechner sein. Die Bestimmungseinheit und/oder die Normierungseinheit und/oder die Vergleichseinheit und/oder die Auswähleinheit und/oder die Ausgabeeinheit kann ein Rechner sein.

Die Bestimmungseinheit, die Normierungseinheit, die Vergleichseinheit, die Auswähleinheit und die Ausgabeeinheit können untereinander, insbesondere über ein Kabel oder drahtlos, kommunikativ verbunden sein. Das Detektionssystem, insbesondere einzelne Komponenten davon, können mit einer Steuerungseinrichtung der Heizeinrichtung und/oder der Steuerung der Verpackungsmaschine und/oder einem Datenspeicher der Heizeinrichtung und/oder einem Datenspeicher der Verpackungsmaschine kommunikativ verbunden sein.

Vorzugsweise umfasst das Detektionssystem zumindest einen Sensor zum Messen der aktuellen Heizleistung oder zumindest einen Sensor zum Messen eines aktuellen Maschinenstroms und einer aktuellen Maschinenspannung der Heizeinrichtung, wobei die Bestimmungseinheit dazu ausgebildet ist, die aktuelle Heizleistung basierend auf dem aktuellen Maschinenstrom und der aktuellen Maschinenspannung zu bestimmen. Der Sensor kann ein Leistungssensor und/oder ein Stromsensor und/oder ein Spannungssensor sein. Die Bestimmungseinheit zum Bestimmen einer aktuellen Heizleistung den Sensor umfassen oder mit dem Sensor kommunikativ verbunden sein. Zum Beispiel kann die Bestimmungseinheit den gemessenen aktuellen Maschinenstrom und die aktuelle Maschinenspannung auswerten und die aktuelle Heizleistung bestimmen. Optional können weitere Sensoren, insbesondere Betriebsbedingungs-Sensoren zum Bestimmen der aktuellen Betriebsbedingungen der Heizeirichtung, vorgesehen sein. Beispielsweise kann ein Temperatursensor zum Bestimmen der aktuellen Heiztemperatur der Heizeinrichtung vorgesehen sein.

Das Statussignal kann ein akustisches und/oder optisches Signal sein. Die Ausgabeeinheit zum Ausgeben des Statussignals kann eine Anzeigevorrichtung, z.B. Display, oder einen Lautsprecher sein. Die Ausgabeeinheit kann an der Verpackungsmaschine oder separat davon angeordnet sein. Die Ausgabeeinheit kann Bedienelemente, zum Beispiel zum manuellen Beeinflussen der Heizeinrichtung und/oder der Verpackungsmaschine, insbesondre durch den Bediener oder das Wartungspersonal, aufweisen.

Ein weiterer Aspekt der Erfindung betrifft eine Verpackungsmaschine mit einem Detektionssystem, insbesondere gemäß einer der hierin beschriebenen Ausführungsformen. Es können sich dieselben Vorteile ergeben wie für das vorgehend beschriebene Detektionssystem und Verfahren.

Die Verpackungsmaschine kann zum Beispiel eine Tiefziehverpackungsmaschine oder ein Traysealer sein. Im Prinzip kann die Heizeinrichtung auch an einer anderen Maschine verwendet werden, beispielsweise einer Teigverarbeitungsmaschine.

Die Verpackungsmaschine kann über eine Steuerung verfügen. Diese kann die in der Verpackungsmaschine ablaufenden Prozesse steuern und überwachen.

Die Verpackungsmaschine kann eine oder mehrere Arbeitsstationen aufweisen, insbesondere eine Formstation zum Formen, insbesondere Tiefziehen, von Verpackungsmulden in eine Folie, eine Befüllstation zum Befüllen der Verpackungsmulden mit Produkten, eine Siegelstation zum Versiegeln der Verpackungsmulden mit einer Oberfolie und eine Schneidstation zum Vereinzeln der Verpackungsmulden. Die Arbeitsstationen können in der genannten Reihenfolge hintereinander entlang der Produktionsrichtung der Verpackungsmaschine angeordnet sein.

Die Heizeinrichtung kann zumindest ein Heizelement, vorzugsweise mehrere Heizelemente, aufweisen. Die Heizeinrichtung kann dazu ausgebildet sein, einen Rohstoff (z.B. Folie, Verpackungsschale) oder Werkzeuge (z.B. Siegelrahmen) zu erwärmen. Die Heizeinrichtung kann Teil einer Arbeitsstation sein oder zumindest in der Nähe einer Arbeitsstation angeordnet sein.

Das Detektionssystem kann an der Verpackungsmaschine angeordnet sein. Das Detektionssystem kann in die Steuerung der Verpackungsmaschine integriert oder separat ausgeführt sein. Das Detektionssystem kann mit der Steuerung der Verpackungsmaschine kommunikativ verbunden sein.

Das Detektionssystem und/oder die Heizeinrichtung und/oder die Verpackungsmaschine kann einen Datenspeicher aufweisen. Auf dem Datenspeicher können Informationen über das Detektionssystem und/oder die Heizeinrichtung und/oder die Verpackungsmaschine gespeichert sein. Auf dem Datenspeicher können die theoretischen Betriebsdaten der Heizeirichtung, insbesondere die theoretische Heizleistung und/oder die normierte theoretische Heizleistung und/oder die theoretische Maschinenspannung und/oder der theoretische Maschinenstrom, und/oder die Bezugs-Heizspannung und/oder der Schwellenwert gespeichert sein. Das Detektionssystem, insbesondere einzelne Komponenten davon, kann auf die Daten im Datenspeicher zugreifen, um die Funktionsfähigkeit einer Heizeinrichtung zu bestimmen.

Die von einem der Aspekte (Verfahren, Detektionssystem oder Verpackungsmaschine) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine Seitenansicht einer Verpackungsmaschine, die in Form einer Tiefziehverpackungsmaschine vorliegt, mit einem Detektionssystem,
- Figur 2: eine Seitenansicht einer Verpackungsmaschine, die in Form eines Traysealers vorliegt, mit dem Detektionssystem,
- Figur 3: eine funktionsfähige Heizeinrichtung,
- Figur 4: eine defekte Heizeinrichtung,
- Figur 5: ein Detektionssystem zum Bestimmen der Funktionsfähigkeit der Heizeinrichtung, und
- Figur 6: ein Verfahren zum Bestimmen einer Funktionsfähigkeit der Heizeinrichtung.

Gleiche technische Merkmale sind in den Figuren durchgehend mit den gleichen Bezugszeichen versehen.

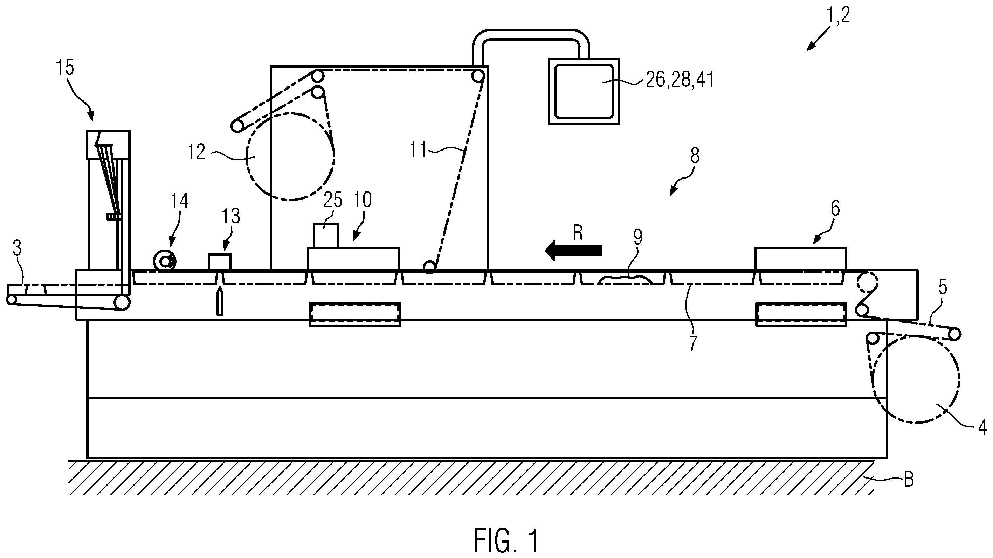

Figur 1 zeigt eine Verpackungsmaschine 1, die in Form einer Tiefziehverpackungsmaschine 2 vorliegt. Die Tiefziehverpackungsmaschine 2 ist dazu konfiguriert, Verpackungen 3 herzustellen. Die Tiefziehverpackungsmaschine 2 umfasst eine Abwicklung 4 für eine Unterfolie 5. In Produktionsrichtung R stromabwärts der Abwicklung 4 ist eine Formstation 6 positioniert, die in die Unterfolie 5 durch Tiefziehen, beispielsweise mittels Druckluft und/oder Vakuum, Verpackungsmulden 7 formt. Stromabwärts der Formstation 6 ist eine Einlegestrecke 8 an der Tiefziehverpackungsmaschine 2 ausgebildet, an welcher Produkte 9 in die Verpackungsmulden 7 eingelegt werden. Stromabwärts in Produktionsrichtung R folgt eine Siegelstation 10, mittels welcher sich die mit Produkt 9 beladene Verpackungsmulden 7 mit einer Oberfolie 11 verschließen lassen. Die Oberfolie 11 wird von einer Oberfolienabwicklung 12 in die Siegelstation 10 geführt. Nach Verlassen der Siegelstation 10 werden die versiegelten Verpackungsmulden 7 zunächst einer Querschneideeinrichtung 13 und anschließend einer Längsschneideeinrichtung 14 zugeführt, um vereinzelte Verpackungen 3 herzustellen. Hinter der Längsschneideeinrichtung 14 übrig gebliebene Restfolienstreifen werden von einer am Ausgang der Tiefziehverpackungsmaschine 2 positionierten Restfolienaufnahme 15 aufgenommen.

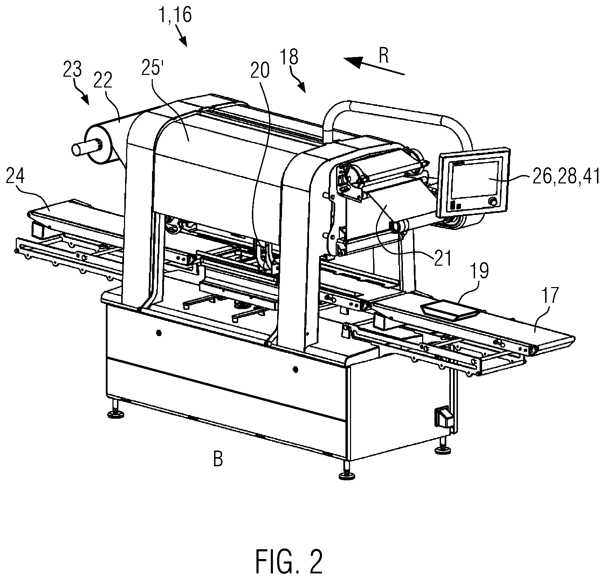

Figur 2 zeigt eine schematische Seitenansicht einer Verpackungsmaschine 1 in Form eines Traysealers 16. Der Traysealer 16 umfasst ein Zuführband 17. Stromabwärts in Produktionsrichtung R folgt eine Siegelstation 18. Durch das Zuführband 17 werden leere Verpackungsschalen 19 zur Siegelstation 18 befördert. Die Verpackungsschalen 19 werden mit einer Greifereinrichtung 20 in die Siegelstation 18 umgesetzt und dort mit einer Deckelfolie 21 verschlossen, beispielsweise durch Ansiegeln der Deckfolie 21. Vor oder während des Ansiegelns der Deckelfolie 21 werden den Verpackungen bzw. Verpackungsverbünden entsprechende Bereiche der Deckfolie 21 in der Siegelstation 18 aus der Bahn der Deckfolie 21 ausgeschnitten. Es verbleibt ein Folienrestgitter 22 der Deckfolie 21, welches mit einer Vorrichtung 23 zum Aufwickeln des Folienrestgitters 22 aufgewickelt wird. Die derart fertiggestellten Verpackungen werden über die Greifereinrichtung 20 aus der Siegelstation 18 auf ein Abführband 24 umgesetzt.

Ferner weisen die Tiefziehverpackungsmaschine 2 und der Traysealer 16 jeweils eine Steuerung 28 auf, die die in der Tiefziehverpackungsmaschine 2 bzw. dem Traysealer 16 ablaufenden Prozesse steuert und überwacht.

Ferner zeigen die Figuren 1 und 2, dass die Tiefziehverpackungsmaschine 2 und der Traysealer 16 jeweils zumindest eine Heizeinrichtung 25, 25' umfassen. Die Heizeinrichtung 25 ist an der Tiefziehverpackungsmaschine 2 im Bereich der Siegelstation 10 angebracht, um einen darin befindlichen Siegelrahmen (nicht dargestellt) zum Siegeln der Oberfolie 11 an die Verpackungsmulden 7 zu erwärmen. Die Heizeinrichtung 25' ist am Traysealer 16 im Bereich der Siegelstation 18 angeordnet, um einen darin befindlichen Siegelrahmen (nicht dargestellt) zum Ansiegeln der Deckfolie 21 an die Verpackungsschalen 19 zu erwärmen.

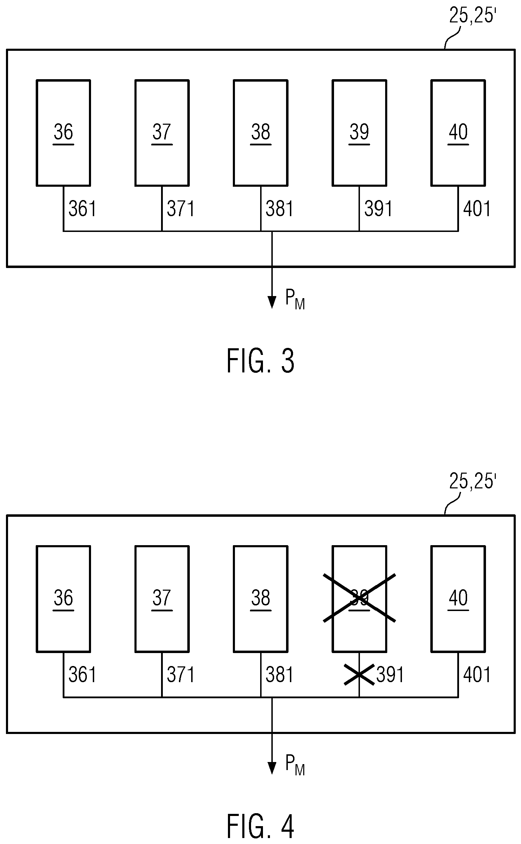

Figur 3 zeigt die Heizeinrichtung 25, 25'. Diese umfasst fünf Heizelemente 36, 37, 38, 39, 40. Um die Verpackungsmulden 7 bzw. die Verpackungsschalen 19 zu versiegeln, ist es erforderlich, dass der jeweilige Siegelrahmen mittels der Heizeinrichtung 25, 25' bzw. der Heizelemente 36, 37, 38, 39, 40 auf einen gewünschten Temperaturbereich erwärmt wird. Arbeitet die Heizeinrichtung 25, 25' nicht wie erforderlich, führt dies zu ungenauen oder fehlerhaften Siegelungen. Im vorliegenden Fall stellen alle fünf Heizelemente 36, 37, 38, 39, 40 Heizleistung bereit.

Figur 4 zeigt ebenfalls die Heizeinrichtung 25, 25'. Jedoch ist das Heizelement 39 defekt und stellt keine Heizleistung bereit. Es stellen also nur die Heizelemente 36, 37, 38, 40 Heizleistung bereit. Die insgesamt bereitgestellte Heizleistung ist damit geringer als die Heizleistung bei fünf aktiven Heizelementen 36, 37, 38, 39, 40. Aufgrund des defekten Heizelement 39 wird eine fehlerhafte Siegelung an der Verpackungsmulden 7 bzw. der Verpackungsschalen 19 erzeugt. Dies erhöht den Ausschuss der Verpackungsmaschine 1. Im schlimmsten Fall werden der Siegelrahmen oder andere Komponenten der Verpackungsmaschine 1 beschädigt. Außerdem erhöht eine fehlerhafte Heizeinrichtung 25, 25' das Risiko für einen Bediener (nicht dargestellt) der Verpackungsmaschine 1.

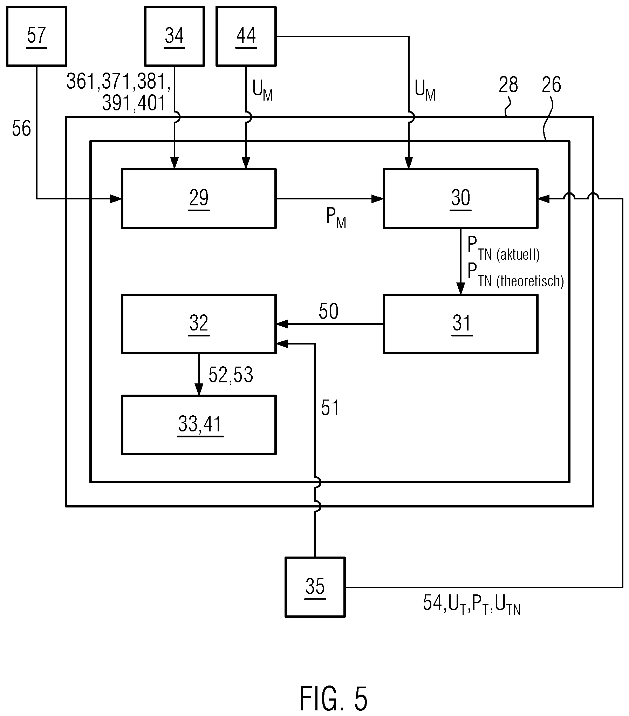

Für einen reibungsfreien Prozessablauf der Verpackungsmaschine 1 ist es daher wünschenswert, die Funktionsfähigkeit der Heizeinrichtung 25, 25' zu bestimmen. Dazu ist an der Verpackungsmaschine 1 ein Detektionssystem 26 vorgesehen. Im Idealfall wird dadurch ein Defekt eines Heizelements 36, 37, 38, 39, 40 erkannt. Wie Figur 5 zeigt, ist das Detektionssystem 26 in die Steuerung 28 der Verpackungsmaschine 1 integriert. Das Detektionssystem 26 umfasst eine Bestimmungseinheit 29, eine Normierungseinheit 30, eine Vergleichseinheit 31, eine Auswähleinheit 32 und eine Ausgabeeinheit 33. Diese sind, wie in Figur 5 gezeigt, miteinander kommunikativ verbunden. Die Normierungseinheit 30 und die Auswähleinheit 32 sind ferner jeweils mit einem Datenspeicher 35 der Heizeinrichtung 25, 25' kommunikativ verbunden.

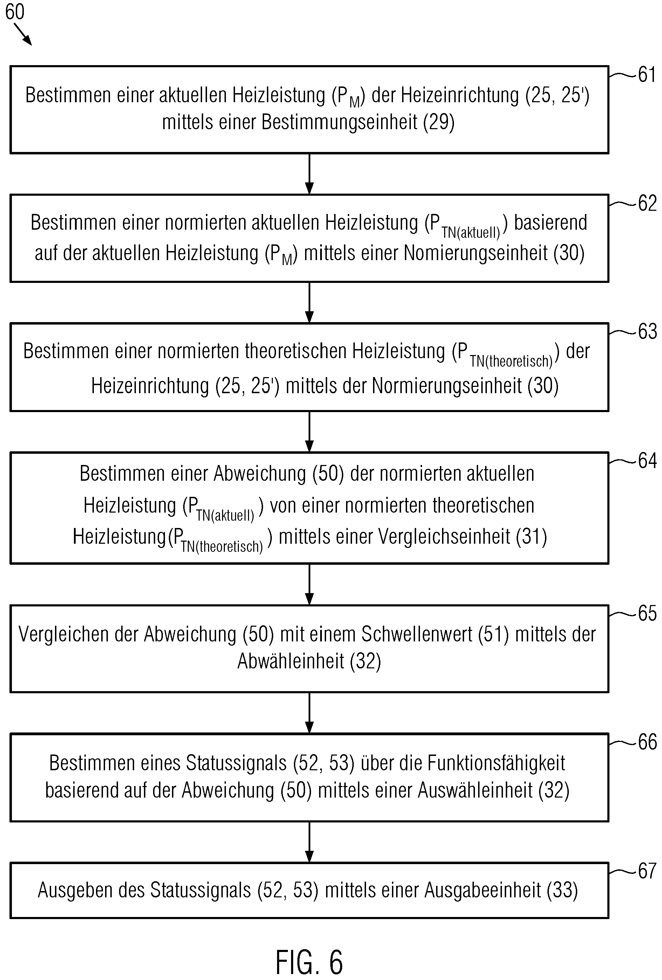

Figur 6 zeigt ein Ablaufdiagramm eines Verfahrens 60 zum Bestimmen der Funktionsfähigkeit der in den Figuren 3 und 4 gezeigten Heizeinrichtung 25, 25'.

In einem ersten Schritt 61 bestimmt die Bestimmungseinheit 29 eine aktuelle Heizleistung *P_{M}* der Heizeinrichtung 25, 25'. Die aktuelle Heizleistung *P_{M}* und damit die normierte aktuelle Heizleistung P_{TN(aktuell)} basieren auf aktuellen Betriebsbedingungen 56 der Heizeinrichtung 25, 25'. Je nach den aktuellen Betriebsbedingungen 56 arbeitet die Heizeinrichtung 25, 25' ideal oder nicht. Die Berücksichtigung der aktuellen Betriebsbedingungen 56 der Heizeinrichtung 25, 25' erhöht die Genauigkeit der Bestimmung der Funktionsfähigkeit der Heizeinrichtung 25, 25'. Die aktuellen Betriebsbedingungen 56 geben den Betriebszustand der Heizeinrichtung 25, 25' an, bei der sie aktuell arbeitet. Die aktuellen Betriebsbedingungen 56 umfassen die aktuelle Maschinenspannung U_{M}, die aktuelle Heizleistung P_{M}, einen aktuellen Maschinenstrom und eine aktuelle Heiztemperatur der Heizeinrichtung 25, 25' der Heizeinrichtung 25, 25'. Außerdem geben die aktuellen Betriebsbedingungen 56 Belastungsschwankungen der Heizeinrichtung 25, 25' an. Betriebsbedingungs-Sensoren 57, insbesondere Temperatursensoren, Stromsensoren und Drehzahlsensoren, erfassen die aktuellen Betriebsbedingungen 56 und leiten diese an die Bestimmungseinheit 29 weiter. Die aktuelle Maschinenspannung *U_{M}* wird mittels eines Spannungssensors 44 zu bspw. 235 Volt bestimmt und an die Bestimmungseinheit 29 weitergeleitet. Ferner steht die Bestimmungseinheit 29 in kommunikativer Verbindung mit einem Leistungssensor 34. Der Leistungssensor 34 erfasst die aktuellen Teilheizleistungen 361, 371, 381, 391, 401 der Heizelemente 36, 37, 38, 39, 40. Im vorliegenden Ausführungsbeispiel erfasst der Leistungssensor 34 jeweils drei Leistungswerte von jedem Heizelement 36, 37, 38, 39, 40 und sendet diese an die Bestimmungseinheit 29. Die Bestimmungseinheit 29 bildet unter Berücksichtigung der aktuellen Betriebsbedingungen 56 aus den jeweils drei Leistungswerten jedes Heizelements 36, 37, 38, 39, 40 einen Mittelwert, der die aktuellen Teilheizleistungen 361, 371, 381, 391, 401 der Heizelement 36, 37, 38, 39, 40 angibt. Die Bestimmungseinheit 29 summiert die aktuellen Teilheizleistungen 361, 371, 381, 391, 401 und bildet daraus die aktuelle Heizleistung *P_{M}* der Heizeinrichtung 25, 25'. Die Mittelung der Leistungswerten jedes Heizelements 36, 37, 38, 39, 40 erhöht die Genauigkeit bei der Bestimmung der aktuelle Heizleistung *P_{M}.* Im vorliegenden Fall ergibt sich für die in Figur 3 gezeigte Heizeinrichtung 25, 25', dass die Heizelemente 36, 37, 38, 39, 40 jeweils die aktuellen Teilheizleistungen 361, 371, 381, 391 401 von bspw. 250 Watt bereitstellen. Die Summe der Teilheizleistungen 361, 371, 381, 391, 401 ergibt die aktuelle Heizleistung *P_{M} von* 1250 Watt. Für die in Figur 4 gezeigte Heizeinrichtung 25, 25' ergibt sich, dass die Heizelemente 36, 37, 38, 40 jeweils die aktuellen Teilheizleistungen 361, 371, 381, 401 von 250 Watt und für das Heizelement 39 die aktuelle Teilheizleistung 391 von 0 Watt liefert. In diesem Fall ergibt die Summe der Teilheizleistungen 361, 371, 381, 391, 401 die aktuelle Heizleistung *P_{M} von* 1000 Watt. Die Bestimmungseinheit 29 leitet die aktuelle Heizleistung *P_{M}* an die Normierungseinheit 30 weiter.

In einem zweiten Schritt 62 bestimmt die Normierungseinheit 30 eine normierte aktuelle Heizleistung *P*_{*TN*(*aktuell*)} basierend auf der aktuellen Heizleistung *P_{M}* gemäß der folgenden ersten Formel: ${P}_{TN \left(aktuell\right)} = \frac{{\left({U}_{TN}\right)}^{2}}{{\left({U}_{M}\right)}^{2}} \times {P}_{M} .$

Dabei gibt *U_{TN}* eine Bezugs-Heizspannung in Höhe von 230 Volt und *U_{M}* eine aktuelle Maschinenspannung an. Die aktuelle Maschinenspannung *U_{M}* von 235 Volt wird vom Spannungssensor 44 an die Normierungseinheit 30 weitergeleitet. Die Normierungseinheit 30 ist außerdem mit dem Datenspeicher 35 verbunden, um von diesem die Bezugs-Heizspannung U_{TN} von 230 Volt zu erhalten. Aus der ersten Formel ergibt sich für die in Figur 3 gezeigte Heizeinrichtung 25, 25': ${P}_{TN \left(aktuell\right)} = \frac{{\left(230 Volt\right)}^{2}}{{\left(235 Volt\right)}^{2}} \times 1250 Watt = 1197 , 37 Watt .$

Es ergibt sich somit eine aktuelle Heizleistung *P*_{*TN*(*aktuell*)} von 1197,37 Watt. Aus der ersten Formel ergibt sich für die in Figur 4 gezeigte Heizeinrichtung 25, 25': ${P}_{TN \left(aktuell\right)} = \frac{{\left(230 Volt\right)}^{2}}{{\left(235 Volt\right)}^{2}} \times 1000 Watt = 957 , 90 Watt .$

Es ergibt sich somit eine aktuelle Heizleistung *P*_{*TN*(*aktuell*)} von 957,90 Watt. Die Normierungseinheit 30 leitet die aktuelle Heizleistung *P*_{*TN*(*aktuell*)} an die Vergleichseinheit 31 weiter.

In einem dritten Schritt 63 bestimmt die Normierungseinheit 30 eine normierte theoretische Heizleistung *P*_{*TN*(*theoretisch*)} der Heizeinrichtung 25, 25' gemäß der folgenden zweiten Formel: ${P}_{TN \left(theoretisch\right)} = \frac{{\left({U}_{TN}\right)}^{2}}{{\left({U}_{T}\right)}^{2}} \times {P}_{T} .$

Dabei *U_{T}* eine theoretische Maschinenspannung und *P_{T}* eine theoretische Heizleistung bei der theoretischen Maschinenspannung *U_{T}* an. Die normierte theoretische Heizleistung P_{TN(theoretisch)} basiert auf theoretischen Betriebsdaten 54 der Heizeinrichtung 25, 25'. Die theoretischen Betriebsdaten 54 geben einen Betriebszustand der Heizeinrichtung 25, 25' an, bei der sie ideal arbeitet. Die Heizeinrichtung 25, 25' arbeitet ideal, wenn das durch sie erzeugte Arbeitsergebnis, z. B. Erwärmen von zu bearbeiteten Rohstoffen (z.B. Oberfolie 11, Deckelfolie 21) oder Werkzeugen (z.B. Siegelrahmen) optimal erreicht wird. Die theoretischen Betriebsdaten 54 umfassen die theoretische Maschinenspannung U_{T} und die theoretische Heizleistung P_{T} sowie Angaben über einen theoretischen Maschinenstrom und eine Soll-Heiztemperatur der Heizeinrichtung. Die theoretischen Betriebsdaten 54 sind im Datenspeicher 35 gespeichert und werden der Normierungseinheit 30 von diesem zur Verfügung gestellt. Die theoretische Maschinenspannung *U_{T}* beträgt im vorliegenden Ausführungsbeispiel 220 Volt und die theoretische Heizleistung *P_{T}* beträgt 1100 Watt. Aus der zweiten Formel ergibt sich für die theoretische Heizleistung *P*_{*TN*(*theoretisch*)}: ${P}_{TN \left(theoretisch\right)} = \frac{{\left(230 Volt\right)}^{2}}{{\left(220 Volt\right)}^{2}} \times 1100 Watt = 1202 , 27 Watt .$

Es ergibt sich somit eine theoretische Heizleistung *P*_{*TN*(*theoretisch*)} von 1202,27 Watt. Die Normierungseinheit 30 leitet die theoretische Heizleistung *P*_{*TN*(*theoretisch*)} an die Vergleichseinheit 31 weiter.

In einem vierten Schritt 64 bestimmt die Vergleichseinheit 31 eine Abweichung 50 der normierten aktuellen Heizleistung *P*_{*TN*(*aktuell*)} von der normierten theoretischen Heizleistung *P*_{*TN*(*theoretisch*)}. Dazu wird die betragsmäßige Differenz zwischen der normierten aktuellen Heizleistung *P*_{*TN*(*aktuell*)} und der normierten theoretischen Heizleistung *P*_{*TN*(*theoretisch*)} gebildet. Für die in Figur 3 gezeigte Heizeinrichtung 25, 25' ergibt sich somit eine Abweichung 50 von 4,9 Watt. Für die in Figur 4 gezeigte Heizeinrichtung 25, 25' ergibt hingegen eine Abweichung 50 von 244,37 Watt. Würde die Differenz aus der aktuellen Heizleistung *P_{M}* und der theoretischen Heizleistung *P_{T}* gebildet, würde sich für die in Figur 3 gezeigte Heizeinrichtung 25, 25' eine Abweichung 50 von 150 ergeben und für die in Figur 4 gezeigte Heizeinrichtung 25, 25' würde sich eine Abweichung 50 von 100 Watt ergeben. In diesem Fall würde also festgestellt, dass die defekte Heizeinrichtung 25, 25' aus Figur 4 weniger stark vom Sollzustand abweicht als die funktionsfähige Heizeinrichtung 25, 25' aus Figur 3. Die aktuelle Heizleistung *P_{M}* und die theoretische Heizleistung *P_{T}* sind aber nicht auf dieselbe Bezugsgröße normiert. Sie sind daher nicht vergleichbar und für eine Bestimmung der Funktionsfähigkeit der Heizeinrichtung 25, 25' nicht geeignet. Erst die Normierung der aktuellen Heizleistung *P_{M}* und der theoretischen Heizleistung *P_{T}* macht diese Werte vergleichbar. Die Vergleichseinheit 31 überträgt die Abweichung 50 an die Auswähleinheit 32.

In einem fünften Schritt 65 vergleicht die Auswähleinheit 32 die Abweichung 50 mit einem Schwellenwert 51. Dieser ist im Datenspeicher 35 gespeichert und beträgt 3 Prozent. Der Schwellenwert 51 gibt an wie stark sich die normierte aktuelle Heizleistung *P*_{*TN*(*aktuell*)} und die normierte theoretische Heizleistung *P*_{*TN*(*theoretisch*)} höchstens unterscheiden dürfen, damit die Heizeinrichtung 25, 25' als fehlerfrei bewertet wird und damit für den Arbeitsbetrieb geeignet ist. Im vorliegenden Fall beträgt die Abweichung 50 für die in Figur 3 gezeigte Heizeinrichtung 25, 25' 0,41 Prozent. Für die in Figur 4 gezeigte Heizeinrichtung 25, 25' ergibt sich eine Abweichung 50 von 20,33 Prozent. Die Abweichung 50 für die in Figur 3 gezeigte Heizeinrichtung 25, 25' ist damit deutlich kleiner als der Schwellenwert 51 von 3 Prozent. Die Abweichung 50 für die in Figur 4 gezeigte Heizeinrichtung 25, 25' ist hingegen deutlich größer als der Schwellenwert 51 von 3 Prozent.

In einem sechsten Schritt 66 bestimmt die Auswähleinheit 32 basierend auf der Abweichung 50 und dem Ergebnis des Vergleichs mit dem Schwellenwert 51 das Statussignal 52, 53 über die Funktionsfähigkeit der Heizeinrichtung 25, 25'. Wenn die Abweichung 50 kleiner als der Schwellenwert 51 ist, wird ein erstes Statussignal 52 zum Angeben einer fehlerfreien Funktion bestimmt. Ist die Abweichung 50 hingegen mindestens so groß wie der Schwellenwert 51, wird ein zweites Statussignal 53 zum Angeben einer fehlerhaften Funktion bestimmt. Im vorliegenden Fall wird für die in Figur 3 gezeigte Heizeinrichtung 25, 25' das erste Statussignal 52 zum Angeben einer fehlerfreien Funktion der Heizeinrichtung 25, 25' bestimmt, während für die in Figur 4 gezeigte Heizeinrichtung 25, 25' das zweite Statussignal 53 zum Angeben einer fehlerhaften Funktion der Heizeinrichtung 25, 25' bestimmt wird. Die Auswähleinheit 32 leitet das erste Statussignal 52 und das zweite Statussignal 53 an die Ausgabeeinheit 33 weiter.

In einem siebten Schritt 67 gibt die Ausgabeeinheit 33 das erste Statussignal 52 und das zweite Statussignal 53 über ein Display 41 (siehe Figuren 1 und 2) optisch aus. Über die Anzeige des ersten Statussignal 52 und zweiten Statussignals 53 am Display 41 wird dem Bediener der Verpackungsmaschine 1 besonders einfach die Funktionsfähigkeit der in Figur 3 gezeigten Heizeinrichtung 25, 25' und die mangelnde Funktionsfähigkeit der in Figur 4 gezeigten Heizeinrichtung 25, 25' angezeigt. Dies erhöht die Akzeptanz des Verfahrens bzw. de Detektionssystems 26 beim Bediener. Der Bediener ist somit darüber informiert, dass die in Figur 3 gezeigte Heizeinrichtung 25, 25' fehlerfrei funktioniert und für den Betrieb an der Verpackungsmaschine 1 geeignet ist. Die Prozesse der Verpackungsmaschine 1 können wie geplant durchgeführt werden. In dem anderen Fall, d.h. für die in Figur 4 gezeigte Heizeinrichtung 25, 25' wird der Bediener darüber informiert, dass diese nicht wie erforderlich arbeitet und ggf. ein Defekt vorliegt. Der Bediener kann auf das zweite Statussignal 53 reagieren und entsprechende Maßnahmen, z.B. Anpassung oder sogar Stopp der Heizeinrichtung 25, 25' und/oder der Verpackungsmaschine 1, vornehmen. Dies wirkt sich positiv auf die Prozesse und Produktivität der Verpackungsmaschine 1 aus und erhöht die Langlebigkeit der Heizeinrichtung 25, 25' als auch der Verpackungsmaschine 1 insgesamt.

## Patentansprüche

1. Verfahren (60) zum Bestimmen einer Funktionsfähigkeit einer Heizeinrichtung (25, 25') mit wenigstens einem Heizelement (36, 37, 38, 39, 40) für eine Verpackungsmaschine (1), wobei das Verfahren die folgenden Schritte umfasst:
- Bestimmen einer aktuellen Heizleistung (*P_{M}*) der Heizeinrichtung (25, 25') mittels einer Bestimmungseinheit (29),
- Bestimmen einer normierten aktuellen Heizleistung (*P*_{*TN*(*aktuell*)}) basierend auf der aktuellen Heizleistung (*P_{M}*) mittels einer Normierungseinheit (30),
- Bestimmen einer Abweichung (50) der normierten aktuellen Heizleistung (*P*_{*TN*(*aktuell*)}) von einer normierten theoretischen Heizleistung *P*_{*TN*(*theoretisch*)} mittels einer Vergleichseinheit (31),
- Bestimmen eines Statussignals (52, 53) über die Funktionsfähigkeit basierend auf der Abweichung (50) mittels einer Auswähleinheit (32), und
- Ausgeben des Statussignals (52, 53) mittels einer Ausgabeeinheit (33),
wobei die normierte aktuelle Heizleistung *P*_{*TN*(*aktuell*)} gemäß der folgenden ersten Formel bestimmt wird: ${P}_{TN \left(aktuell\right)} = \frac{{\left({U}_{TN}\right)}^{2}}{{\left({U}_{M}\right)}^{2}} \times {P}_{M} ;$
wobei *U_{TN}* eine Bezugs-Heizspannung, insbesondere von 230 Volt, *U_{M}* eine aktuelle Maschinenspannung und *P_{M}* die aktuelle Heizleistung bei der aktuellen Maschinenspannung *U_{M}* angibt,
wobei die normierte theoretische Heizleistung *P*_{*TN*(*theoretisch*)} gemäß der folgenden zweiten Formel bestimmt wird: ${P}_{TN \left(theoretisch\right)} = \frac{{\left({U}_{TN}\right)}^{2}}{{\left({U}_{T}\right)}^{2}} \times {P}_{T} ;$
wobei *U_{TN}* eine Bezugs-Heizspannung, insbesondere von 230 Volt, *U_{T}* eine theoretische Maschinenspannung und *P_{T}* eine theoretische Heizleistung bei der theoretischen Maschinenspannung *U_{T}* angibt.

2. Verfahren nach Anspruch 1, wobei die aktuelle Heizleistung (*P_{M}*) mit zumindest einem Sensor (34, 44, 57) gemessen wird oder ein aktueller Maschinenstrom und eine aktuelle Maschinenspannung der Heizeinrichtung (25, 25') mit zumindest einem Sensor (34, 44, 57) gemessen werden und die aktuelle Heizleistung (*P_{M}*) basierend auf dem aktuellen Maschinenstrom und der aktuellen Maschinenspannung mittels der Bestimmungseinheit bestimmt wird.

3. Verfahren nach Anspruch 1 oder 2, wobei die Abweichung (50) eine, insbesondere betragsmäßige, Differenz zwischen der normierten aktuellen Heizleistung *P*_{*TN*(*aktuell*)} und der normierten theoretischen Heizleistung *P*_{*TN*(*theoretisch*)} ist.

4. Verfahren nach einem der vorangehenden Ansprüche, wobei die Abweichung (50) mit einem Schwellenwert (51) verglichen wird, und wobei ein erstes Statussignal (52) zum Angeben einer fehlerfreien Funktion bestimmt wird, wenn die Abweichung (50) kleiner als der Schwellenwert (51) ist, wobei ein zweites Statussignal (53) zum Angeben einer fehlerhaften Funktion bestimmt wird, wenn die Abweichung (50) mindestens dem Schwellenwert (51) entspricht.

5. Verfahren nach einem der vorangehenden Ansprüche, wobei die normierte theoretischen Heizleistung *P*_{*TN*(*theoretisch*)} in einem Datenspeicher (35) der Heizeinrichtung und/oder der Verpackungsmaschine (1) gespeichert ist.

6. Verfahren nach einem der vorangehenden Ansprüche, wobei die Heizeinrichtung (25, 25') mehrere Heizelemente (36, 37, 38, 39, 40) mit je einer aktuellen Teilheizleistung (361, 371, 381, 391, 401) umfasst, wobei eine Summe der aktuellen Teilheizleistungen (361, 371, 381, 391, 401) die aktuelle Heizleistung (*P_{M}*) angibt.

7. Verfahren nach Anspruch 6, wobei zumindest ein Sensor (34, 44, 57) die aktuellen Teilheizleistungen (361, 371, 381, 391, 401) misst oder wobei zumindest ein Sensor (34, 44, 57) aktuelle Teilmaschinenströme und aktuelle Teilmaschinenspannungen der Heizelemente (36, 37, 38, 39, 40) misst und basierend auf den aktuellen Teilmaschinenströmen und den aktuellen Teilmaschinenspannungen die aktuelle Heizleistung (*P_{M}*) bestimmt.

8. Verfahren nach einem der vorangehenden Ansprüche, wobei das Statussignal (52, 53) an eine Steuerung (28) der Verpackungsmaschine (1) übertragen wird, insbesondere wobei ein Betrieb der Verpackungsmaschine (1) basierend auf dem Statussignal (52, 53) gesteuert wird.

9. Detektionssystem (26) zum Bestimmen einer Funktionsfähigkeit einer Heizeinrichtung (25, 25') für eine Verpackungsmaschine (1), wobei das Detektionssystem (26) umfasst:
- eine Bestimmungseinheit (29) zum Bestimmen einer aktuellen Heizleistung (*P_{M}*) der Heizeinrichtung (25, 25'),
- eine Normierungseinheit (30) zum Bestimmen einer normierten aktuellen Heizleistung (*P*_{*TN*(*aktuell*)}) basierend auf der aktuellen Heizleistung (*P_{M}*),
- eine Vergleichseinheit (31) zum Bestimmen einer Abweichung (50) der normierten aktuellen Heizleistung (*P*_{*TN*(*aktuell*)}) von einer normierten theoretischen Heizleistung *P*_{*TN*(*theoretisch*)}*,*
- eine Auswähleinheit (32) zum Wählen eines Statussignals (52, 53) basierend auf der Abweichung (50), und
- eine Ausgabeeinheit (33) zum Ausgeben des Statussignals (52, 53),
wobei die normierte aktuelle Heizleistung *P*_{*TN*(*aktuell*)} gemäß der folgenden ersten Formel bestimmt wird: ${P}_{TN \left(aktuell\right)} = \frac{{\left({U}_{TN}\right)}^{2}}{{\left({U}_{M}\right)}^{2}} \times {P}_{M} ;$
wobei *U_{TN}* eine Bezugs-Heizspannung, insbesondere von 230 Volt, *U_{M}* eine aktuelle Maschinenspannung und *P_{M}* die aktuelle Heizleistung bei der aktuellen Maschinenspannung *U_{M}* angibt,
wobei die normierte theoretische Heizleistung *P*_{*TN*(*theoretisch*)} gemäß der folgenden zweiten Formel bestimmt wird:${P}_{TN \left(theoretisch\right)} = \frac{{\left({U}_{TN}\right)}^{2}}{{\left({U}_{T}\right)}^{2}} \times {P}_{T} ;$
wobei *U_{TN}* eine Bezugs-Heizspannung, insbesondere von 230 Volt, *U_{T}* eine theoretische Maschinenspannung und *P_{T}* eine theoretische Heizleistung bei der theoretischen Maschinenspannung *U_{T}* angibt.

10. Detektionssystem nach Anspruch 9, **gekennzeichnet durch** zumindest einen Sensor (34, 44, 57) zum Messen der aktuellen Heizleistung (*P_{M}*) oder **gekennzeichnet durch** zumindest einen Sensor (34, 44, 57) zum Messen eines aktuellen Maschinenstroms und einer aktuellen Maschinenspannung der Heizeinrichtung (25, 25'), wobei die Bestimmungseinheit (29) dazu ausgebildet ist, die aktuelle Heizleistung (*P_{M}*) basierend auf dem aktuellen Maschinenstrom und der aktuellen Maschinenspannung zu bestimmen.

11. Verpackungsmaschine (1) mit einem Detektionssystem (26) nach Anspruch 9 oder 10.

## Claims

1. A method (60) for determining the functionality of a heating device (25, 25') having at least one heating element (36, 37, 38, 39, 40) for a packaging machine (1), wherein the method comprises the following steps:
- determining a current heating power (*P*_{M}) of the heating device (25, 25') by means of a determination unit (29),
- determining a normalized current heating power (*P*_{TN(aktuell)}) based on the current heating power (*P*_{M}) by means of a normalization unit (30),
- determining a deviation (50) of the normalized current heating power (*P*_{TN(aktuell)}) from a normalized theoretical heating power *P*_{TN(theoretisch)} by means of a comparison unit (31),
- determining a status signal (52, 53) concerning the functionality based on the deviation (50) by means of a selection unit (32), and
- outputting the status signal (52, 53) by means of an output unit (33),
wherein the normalized current heating power *P*_{*TN*(*aktuell*)} is determined according to the following first formula: ${P}_{TN \left(aktuell\right)} = \frac{{\left({U}_{TN}\right)}^{2}}{{\left({U}_{M}\right)}^{2}} \times {P}_{M} ;$
wherein *U_{TN}* denotes a reference heating voltage, in particular of 230 volts, *U*_{M} denotes a current machine voltage and *P*_{M} denotes the current heating power at the current machine voltage *U*_{M},
wherein the normalized theoretical heating power *P*_{TN(theoretisch)} is determined according to the following second formula: ${P}_{TN \left(theoretisch\right)} = \frac{{\left({U}_{TN}\right)}^{2}}{{\left({U}_{T}\right)}^{2}} \times {P}_{T} ;$
wherein *U*_{TN} denotes a reference heating voltage, in particular of 230 volts, *U*_{T} denotes a theoretical machine voltage and *P*_{T} denotes a theoretical heating power at the theoretical machine voltage *U*_{T}.

2. The method according to claim 1, wherein the current heating power (*P*_{M}) is measured with at least one sensor (34, 44, 57) or a current machine current and a current machine voltage of the heating device (25, 25') are measured with at least one sensor (34, 44, 57) and the current heating power (*P*_{M}) is determined based on the current machine current and the current machine voltage by means of the determination unit.

3. The method according to claim 1 or 2, wherein the deviation (50) is a difference, in particular an absolute difference, between the normalized current heating power *P*_{*TN*(*aktuell*)} and the normalized theoretical heating power *P*_{TN(theoretisch)}.

4. The method according to any one of the preceding claims, wherein the deviation (50) is compared with a threshold value (51), and wherein a first status signal (52) for indicating fault-free operation is determined when the deviation (50) is less than the threshold value (51), wherein a second status signal (53) for indicating faulty operation is determined when the deviation (50) is at least equal to the threshold value (51).

5. The method according to any one of the preceding claims, wherein the normalized theoretical heating power *P*_{TN(theoretisch)} is stored in a data memory (35) of the heating device and/or the packaging machine (1).

6. The method according to any one of the preceding claims, wherein the heating device (25, 25') comprises several heating elements (36, 37, 38, 39, 40) each having a current partial heating power (361, 371, 381, 391, 401), wherein a sum of the current partial heating powers (361, 371, 381, 391, 401) indicates the current heating power (*P*_{M}).

7. The method according to claim 6, wherein at least one sensor (34, 44, 57) measures the current partial heating powers (361, 371, 381, 391, 401) or wherein at least one sensor (34, 44, 57) measures current partial machine currents and current partial machine voltages of the heating elements (36, 37, 38, 39, 40) and determines the current heating power (*P*_{M}) based on the current partial machine currents and the current partial machine voltages.

8. The method according to any one of the preceding claims, wherein the status signal (52, 53) is transmitted to a control unit (28) of the packaging machine (1), in particular wherein operation of the packaging machine (1) is controlled based on the status signal (52, 53).

9. A detection system (26) for determining the functionality of a heating device (25, 25') for a packaging machine (1), wherein the detection system (26) comprises:
- a determination unit (29) for determining a current heating power (*P*_{M}) of the heating device (25, 25'),
- a normalization unit (30) for determining a normalized current heating power (*P*_{TN(aktuell)}) based on the current heating power (*P*_{M}),
- a comparison unit (31) for determining a deviation (50) of the normalized current heating power (*P*_{TN(aktuell)}) from a normalized theoretical heating power*P*_{TN(theoretisch)},
- a selection unit (32) for selecting a status signal (52, 53) based on the deviation (50), and
- an output unit (33) for outputting the status signal (52, 53),
wherein the normalized current heating power *P*_{*TN*(*aktuell*)} is determined according to the following first formula: ${P}_{TN \left(aktuell\right)} = \frac{{\left({U}_{TN}\right)}^{2}}{{\left({U}_{M}\right)}^{2}} \times {P}_{M} ;$
wherein *U*_{TN} denotes a reference heating voltage, in particular of 230 volts, *U*_{M} denotes a current machine voltage and *P*_{M} denotes the current heating power at the current machine voltage *U*_{M},
wherein the normalized theoretical heating power *P*_{TN(theoretisch)} is determined according to the following second formula: ${P}_{TN \left(theoretisch\right)} = \frac{{\left({U}_{TN}\right)}^{2}}{{\left({U}_{T}\right)}^{2}} \times {P}_{T} ;$
wherein *U_{TN}* denotes a reference heating voltage, in particular of 230 volts, *U*_{T} denotes a theoretical machine voltage and *P*_{T} denotes a theoretical heating power at the theoretical machine voltage *U*_{T}.

10. The detection system according to claim 9, **characterized by** at least one sensor (34, 44, 57) for measuring the current heating power (*P*_{M}) or **characterized by** at least one sensor (34, 44, 57) for measuring a current machine current and a current machine voltage of the heating device (25, 25'), wherein the determination unit (29) is configured to determine the current heating power (*P*_{M}) based on the current machine current and the current machine voltage.

11. A packaging machine (1) having a detection system (26) according to claim 9 or 10.

## Revendications

1. Procédé (60) pour déterminer une capacité fonctionnelle d'un dispositif de chauffage (25, 25') comportant au moins un élément chauffant (36, 37, 38, 39, 40) pour une machine d'emballage (1), le procédé comprenant les étapes suivantes :
- détermination d'une puissance de chauffage actuelle (*P*_{M}) du dispositif de chauffage (25, 25') au moyen d'une unité de détermination (29),
- détermination d'une puissance de chauffage actuelle normalisée (*P*_{TN(aktuell)}) sur la base de la puissance de chauffage actuelle (*P*_{M}) au moyen d'une unité de normalisation (30),
- détermination d'un écart (50) de la puissance de chauffage actuelle normalisée (*P*_{TN(aktuell)}) par rapport à une puissance de chauffage théorique normalisée *P*_{TN(theoretisch)} au moyen d'une unité de comparaison (31),
- détermination d'un signal d'état (52, 53) concernant la capacité fonctionnelle sur la base de l'écart (50) au moyen d'une unité de sélection (32), et
- émission du signal d'état (52, 53) au moyen d'une unité de sortie (33),
la puissance de chauffage actuelle normalisée *P*_{*TN*(*aktuell*)} étant déterminée selon la première formule suivante : ${P}_{TN \left(aktuell\right)} = \frac{{\left({U}_{TN}\right)}^{2}}{{\left({U}_{M}\right)}^{2}} \times {P}_{M} ;$
où *U*_{TN} désigne une tension de chauffage de référence, notamment de 230 volts, *U*_{M} désigne une tension actuelle de la machine et *P*_{M} désigne la puissance de chauffage actuelle à la tension actuelle de la machine *U*_{M},
la puissance de chauffage théorique normalisée *P*_{TN(theoretisch)} étant déterminée selon la deuxième formule suivante : ${P}_{TN \left(theoretisch\right)} = \frac{{\left({U}_{TN}\right)}^{2}}{{\left({U}_{T}\right)}^{2}} \times {P}_{T} ;$
où *U*_{TN} désigne une tension de chauffage de référence, notamment de 230 volts, *U*_{T} désigne une tension théorique de la machine et *P*_{T} désigne une puissance de chauffage théorique à la tension théorique de la machine *U*_{T}.

2. Procédé selon la revendication 1, dans lequel la puissance de chauffage actuelle (*P*_{M}) est mesurée à l'aide d'au moins un capteur (34, 44, 57) ou un courant actuel de la machine et une tension actuelle de la machine du dispositif de chauffage (25, 25') sont mesurés à l'aide d'au moins un capteur (34, 44, 57) et la puissance de chauffage actuelle (*P*_{M}) est déterminée sur la base du courant actuel de la machine et de la tension actuelle de la machine au moyen de l'unité de détermination.

3. Procédé selon la revendication 1 ou 2, dans lequel l'écart (50) est une différence, notamment en valeur absolue, entre la puissance de chauffage actuelle normalisée *P*_{*TN*(*aktuell*)} et la puissance de chauffage théorique normalisée *P*_{TN(theoretisch)}.

4. Procédé selon l'une quelconque des revendications précédentes, dans lequel l'écart (50) est comparé à une valeur seuil (51), et dans lequel un premier signal d'état (52) pour indiquer un fonctionnement sans défaut est déterminé lorsque l'écart (50) est inférieur à la valeur seuil (51), un deuxième signal d'état (53) pour indiquer un fonctionnement défectueux étant déterminé lorsque l'écart (50) est au moins égal à la valeur seuil (51).

5. Procédé selon l'une quelconque des revendications précédentes, dans lequel la puissance de chauffage théorique normalisée *P*_{TN(theoretisch)} est stockée dans une mémoire de données (35) du dispositif de chauffage et/ou de la machine d'emballage (1).

6. Procédé selon l'une quelconque des revendications précédentes, dans lequel le dispositif de chauffage (25, 25') comprend plusieurs éléments chauffants (36, 37, 38, 39, 40) présentant chacun une puissance de chauffage partielle actuelle (361, 371, 381, 391, 401), une somme des puissances de chauffage partielles actuelles (361, 371, 381, 391, 401) indiquant la puissance de chauffage actuelle (*P*_{M}).

7. Procédé selon la revendication 6, dans lequel au moins un capteur (34, 44, 57) mesure les puissances de chauffage partielles actuelles (361, 371, 381, 391, 401) ou dans lequel au moins un capteur (34, 44, 57) mesure des courants partiels actuels de la machine et des tensions partielles actuelles de la machine des éléments chauffants (36, 37, 38, 39, 40) et détermine la puissance de chauffage actuelle (*P*_{M}) sur la base des courants partiels actuels de la machine et des tensions partielles actuelles de la machine.

8. Procédé selon l'une quelconque des revendications précédentes, dans lequel le signal d'état (52, 53) est transmis à une unité de commande (28) de la machine d'emballage (1), notamment un fonctionnement de la machine d'emballage (1) étant commandé sur la base du signal d'état (52, 53).

9. Système de détection (26) pour déterminer une capacité fonctionnelle d'un dispositif de chauffage (25, 25') pour une machine d'emballage (1), le système de détection (26) comprenant :
- une unité de détermination (29) pour déterminer une puissance de chauffage actuelle (*P*_{M}) du dispositif de chauffage (25, 25'),
- une unité de normalisation (30) pour déterminer une puissance de chauffage actuelle normalisée (*P*_{TN(aktuell)}) sur la base de la puissance de chauffage actuelle (*P*_{M}),
- une unité de comparaison (31) pour déterminer un écart (50) de la puissance de chauffage actuelle normalisée (*P*_{TN(aktuell)}) par rapport à une puissance de chauffage théorique normalisée *P*_{TN(theoretisch)},
- une unité de sélection (32) pour sélectionner un signal d'état (52, 53) sur la base de l'écart (50), et
- une unité de sortie (33) pour émettre le signal d'état (52, 53),
la puissance de chauffage actuelle normalisée *P*_{*TN*(*aktuell*)} étant déterminée selon la première formule suivante : ${P}_{TN \left(aktuell\right)} = \frac{{\left({U}_{TN}\right)}^{2}}{{\left({U}_{M}\right)}^{2}} \times {P}_{M} ;$
où *U*_{TN} désigne une tension de chauffage de référence, notamment de 230 volts, *U*_{M} désigne une tension actuelle de la machine et *P*_{M} désigne la puissance de chauffage actuelle à la tension actuelle de la machine *U*_{M},
la puissance de chauffage théorique normalisée *P*_{TN(theoretisch)} étant déterminée selon la deuxième formule suivante : ${P}_{TN \left(theoretisch\right)} = \frac{{\left({U}_{TN}\right)}^{2}}{{\left({U}_{T}\right)}^{2}} \times {P}_{T} ;$
où *U*_{TN} désigne une tension de chauffage de référence, notamment de 230 volts, *U*_{T} désigne une tension théorique de la machine et *P*_{T} désigne une puissance de chauffage théorique à la tension théorique de la machine *U*_{T}.

10. Système de détection selon la revendication 9, **caractérisé par** au moins un capteur (34, 44, 57) pour mesurer la puissance de chauffage actuelle (*P*_{M}) ou **caractérisé par** au moins un capteur (34, 44, 57) pour mesurer un courant actuel de la machine et une tension actuelle de la machine du dispositif de chauffage (25, 25'), l'unité de détermination (29) étant conçue pour déterminer la puissance de chauffage actuelle (*P*_{M}) sur la base du courant actuel de la machine et de la tension actuelle de la machine.

11. Machine d'emballage (1) comprenant un système de détection (26) selon la revendication 9 ou 10.
